# EUROPEAN PATENT APPLICATION

(11) **EP 3 805 559 A1**
(43) Date of publication of application: **14.04.2021**
(21) Application number: 19202261.4
(22) Date of filing: 09.10.2019
(51) Int. Cl.: F03D 80/60

(54) **A WIND TURBINE COOLING SYSTEM**

(71) Applicant: Nissens Cooling Solutions A/S, 8700 Horsens (DK)
(72) Inventor: REINHOLDT, Peter, 8700 Horsens (DK); ALLESØ, Anders, 8700 Horsens (DK)
(74) Representative: Dragsted Partners A/S

(57) **Abstract**

The present invention relates to a wind turbine cooling system configured to cool components of a wind turbine, the wind turbine having a nacelle, comprising a cooling medium configured to be circulated in a cooling circuit, the cooling circuit is fluidly connecting the components and a cooling device, the cooling device is arranged on an exterior face of the nacelle and is exposed to ambient conditions, such as wind flow and ambient air temperature outside the nacelle, the cooling medium is cooled in the cooling device by wind flow passing through the cooling device, the cooling medium is circulated from the cooling device to the components, wherein a first temperature altering section is fluidly connected with the cooling circuit upstream of the cooling device, the first temperature altering section being configured to heat the cooling medium before entering into the cooling device, and a second temperature altering section is fluidly connected with the cooling circuit downstream of the cooling device, the second temperature altering section being configured to cool the cooling medium after it has left the cooling device.

## Description

The present invention relates to a wind turbine cooling system and a cooling method configured to cool components of a wind turbine.

A wind turbine is essentially a machine that harvests kinetic energy from the wind and exerts this energy on a rotating shaft before finally converting the mechanical energy to electrical energy. This conversion of energy happens through a number of key components in the wind turbine, but the conversion is not thermodynamically perfect, i.e. it includes losses meaning that a portion of the harvested energy from the wind is dissipated as heat instead of being converted into electricity. The losses appear in the form of heat being generated in various amounts in the components. The location of the components can vary from wind turbine to wind turbine, some components can be placed in the bottom or near the top of the wind turbine tower, but a common feature is that most components are placed close to one another in the nacelle, which comprises a key part of the structural integrity of the wind turbine as well.

The components vary in type and size. Heat-generating components may include large heavy-duty machinery like bearings, brakes, gearbox, generator, pumps, hydraulics and fans, but also power electronics such as large transformers and converters. The amount of heat dissipating from each component varies too, and so does their dependence on the overall power output of the wind turbine, meaning that the heat loss of some components is more affected by the wind turbine operating at part load than other.

For above-mentioned reasons, wind turbines normally have a cooling system to transport heat from the main components to avoid overheating. This type of cooling system may consist of pumps, valves, piping, cooling devices, heat exchangers and a cooling medium. Pumps circulate the cooling medium in the cooling system via piping, and heat is absorbed as it passes the heat-generating components. The heated cooling medium finally reaches the cooling device placed outside the nacelle where it is exposed to the ambient temperature and local wind conditions. Here, the cooling medium is cooled on its way through the cooling device and returned to the pumping unit to complete the circuit.

Besides cooling specific components, the cooling system can also include room cooling of the nacelle itself. This may be done by connecting a fan and an air heat exchanger to the cooling system, or it can be designed as a separate cooling system.

To avoid overheating, the wind turbine must have access to an adequate amount of cooling in order to keep the temperature of the components within an acceptable range. If the temperature is too high, it might cause damage or malfunction to the wind turbine due to overheating. A way to avoid this is to reduce the power output meaning to produce less energy than the current wind conditions would normally allow since lower production will result in lower waste heat dissipation. Reduced energy production means less energy can be sold to the grid and hence a loss of profit.

As stated above, the known cooling system ensures a transport and dissipation of heat from the interior of the nacelle to the outside surrounding environment via the cooling device placed outside the nacelle. The cooling medium flow controlled by the pump is a system parameter and in most cases constant during wind turbine operation. If the incoming wind is considered to have a constant velocity, then the amount of heat the cooling device is able to dissipate to the environment is solely dependent on the temperature difference between the heated cooling medium reaching the cooling device and the local ambient air temperature. That is, in cold climates this temperature difference is large, meaning that the cooling device has no problem of dissipating the heat from the nacelle, but in hot climates the difference becomes smaller, meaning that the cooling device might not be able to dissipate enough heat and hereby ensure an adequate amount of cooling of the wind turbine. This could lead to the before-mentioned situation of overheating the components which should be avoided.

It is an object of the present invention to wholly or partly overcome the above disadvantages and drawbacks of the prior art. More specifically, it is an object to provide an improved wind turbine cooling system which may cool the heat generating components of the wind turbine even in small temperature differences between ambient temperature and the temperature of the cooling medium.

The above objects, together with numerous other objects, advantages and features, which will become evident from the below description, are accomplished by a solution in accordance with the present invention by a wind turbine cooling system configured to cool components of a wind turbine, the wind turbine having a nacelle, comprising
- a cooling medium configured to be circulated in a cooling circuit, the cooling circuit is fluidly connecting the components and a cooling device,
- the cooling device is arranged on an exterior face of the nacelle and is exposed to ambient conditions, such as wind flow and ambient air temperature outside the nacelle,
- the cooling medium is cooled in the cooling device by wind flow passing through the cooling device,
- the cooling medium is circulated from the cooling device to the components,
wherein a first temperature altering section is fluidly connected with the cooling circuit upstream of the cooling device, the first temperature altering section being configured to heat the cooling medium before entering into the cooling device, and a second temperature altering section is fluidly connected with the cooling circuit downstream of the cooling device, the second temperature altering section being configured to cool the cooling medium after it has left the cooling device.

Hereby, an improved wind turbine cooling system for achieving an optimum temperature level for the components of the wind turbine is obtained, but without reducing power output of the components and the wind turbine, even when ambient conditions change, i.e. when the wind turbine is operating in a warm climate, for instance.

Furthermore, the first temperature altering section and the second temperature altering section may be integrated into a temperature altering device.

Moreover, the first temperature altering section and the second temperature altering section may be operatively connected.

Also, the second temperature altering section may be operated independently of the first temperature altering section.

The wind turbine cooling system may further comprise a first valve unit configured to fluidly connect the components with the cooling device and/or the first temperature altering section.

Also, the wind turbine cooling system may further comprise a second valve unit configured to fluidly connect the cooling device with the components and/or the second temperature altering section.

The first valve unit may have an inlet, a first outlet and a second outlet, the first valve unit is configured to have a first position wherein the inlet is fluidly connected with the first outlet, and a second position wherein the inlet is fluidly connected with the second outlet, and wherein the inlet is fluidly connected with the components, the first outlet is fluidly connected with the cooling device, and the second outlet is fluidly connected with the first temperature altering section.

Also, the second valve unit may have an inlet, a first outlet and a second outlet, the second valve unit is configured to have a first position wherein the inlet is fluidly connected with the first outlet, and a second position wherein the inlet is fluidly connected with the second outlet, and wherein the inlet is fluidly connected with the cooling device, the first outlet is fluidly connected with the components, and the second outlet is fluidly connected with the second temperature altering section.

Furthermore, the first valve unit may comprise a first valve having a first valve position wherein the components are fluidly connected with the cooling device and a second valve position wherein a fluid communication through the first valve is closed, and a second valve having a first valve position wherein the components are fluidly connected with the first temperature altering section and a second valve position wherein a fluid communication through the second valve is closed.

In addition, the second valve unit may comprise a first valve having a first valve position wherein the cooling device is fluidly connected with the components and a second valve position wherein a fluid communication through the first valve is closed, and a second valve having a first valve position wherein the cooling device is fluidly connected with the second temperature altering section and a second valve position wherein a fluid communication through the second valve is closed.

When the first valve is in the first valve position, the second valve may be in the second valve position, or vice versa.

The first valve and the second valve may be shut-off valves, two-way valves or throttle valves.

In addition, an ambient temperature sensor may be arranged to measure an ambient air temperature and/or a second temperature sensor configured to measure a temperature of the cooling medium downstream of the cooling device.

Furthermore, a first temperature sensor configured to measure a temperature of the cooling medium downstream of the components may be arranged in the wind turbine cooling system.

The wind turbine cooling system may further comprise a control unit being operatively connected with the first temperature altering section, the second temperature altering section, the ambient air temperature sensor, the first temperature sensor, the second temperature sensor, the first valve unit and/or the second valve unit.

The control unit may be configured to alter the temperature of the cooling medium upstream of the cooling device in relation to a measured ambient air temperature and/or to a measured cooling medium temperature downstream of the cooling device so that the temperature of the cooling medium upstream of the cooling device is larger than the ambient temperature and/or the cooling medium temperature downstream of the cooling device.

Furthermore, the temperature of the cooling medium upstream of the cooling device may be 5°C larger than the ambient air temperature and/or the cooling medium temperature downstream of the cooling device, preferably 10°C larger than the ambient air temperature and/or the cooling medium temperature downstream of the cooling device, more preferably over 15°C larger than the ambient air temperature and/or the cooling medium temperature downstream of the cooling device.

Moreover, the cooling medium may have a first temperature downstream of the components, the cooling medium has a second temperature upstream of the cooling device, the cooling medium has a third temperature downstream of the cooling device, the cooling medium has a fourth temperature downstream of the second temperature altering section, and the fourth temperature being lower than the third temperature.

The first temperature may be between 40-65°C, the second temperature may be between 45-80°C, the third temperature may be between 35-55°C, and the fourth temperature may be between 30-50°C.

Moreover, the temperature altering device may be a refrigeration system, such as a chiller device. A chiller device removes heat from a liquid via a vapour-compression or an absorption refrigeration cycle and discards this heat elswhere.

Furthermore, temperature levels may correspond to pressure levels at which a phase change processes a working medium, which is provided in the temperature altering device by means of a compressor.

The cooling medium from the cooling device may be fluidly connected with the second temperature altering section via a heat exchanger so that the cooling medium can be cooled further to a lower temperature before it reaches the components.

Additionally, the second altering section may be configured to decrease the temperature of the cooling medium by heat being absorbed in the working medium and the temperature altering device being configured to transport and dissipate this heat to the first temperature altering section of the temperature altering device.

The cooling medium from the components may be fluidly connected to the first temperature altering section where the cooling medium receives the dissipated energy via a heat exchanger at a higher temperature and causing the temperature of the cooling medium to increase before it reaches the cooling device.

Moreover, the temperature altering device may be energy consuming.

In addition, the temperature altering device may be arranged inside or outside the nacelle.

The component(s) may be bearings, brakes, a gearbox, a generator, pumps, hydraulics, fans and/or power electronics such as transformers and converters.

Moreover, the components may be arranged inside and/or outside the nacelle. Some components may even be arranged at a distance from the nacelle.

The cooling medium may be water, water-glycol, other water, and anti-freeze solutions.

Furthermore, the working medium may be a natural refrigerant, such as water, propane, CO2, ammonia, or similar, or may be a synthetic refrigerant.

The present invention also relates to a wind turbine comprising a wind turbine cooling system as described above.

The present invention also relates to a cooling method for cooling one or more components of a wind turbine by means of a wind turbine cooling system and may, comprise:
- measuring a first temperature of the cooling medium downstream of the components,
- increasing the temperature of the cooling medium upstream of the cooling device to a second temperature,
- decreasing the temperature of the cooling medium in the cooling device to a third temperature, and
- decreasing the temperature of the cooling medium downstream of the cooling device to a fourth temperature being lower than the third temperature.

Furthermore, the cooling method may further comprise:
- measuring an ambient air temperature and/or a cooling medium temperature downstream of the cooling device,
- altering the second temperature of the cooling medium upstream of the cooling device in relation to the measured ambient air temperature and/or the cooling medium temperature downstream of the cooling device so that the second temperature of the cooling medium is larger than the ambient temperature and/or the cooling medium temperature downstream of the cooling device.

The invention and its many advantages will be described in more detail below with reference to the accompanying schematic drawings, which for the purpose of illustration show some non-limiting embodiments and in which
Fig. 1 shows a part of a wind turbine with a cooling device,
Fig. 2 shows a schematic known cooling system,
Fig. 3 shows an embodiment of the present invention,
Fig. 4 shows another embodiment of the present invention, and
Fig. 5 shows yet another embodiment of the present invention.

All the figures are highly schematic and not necessarily to scale, and they show only those parts which are necessary in order to elucidate the invention, other parts being omitted or merely suggested.

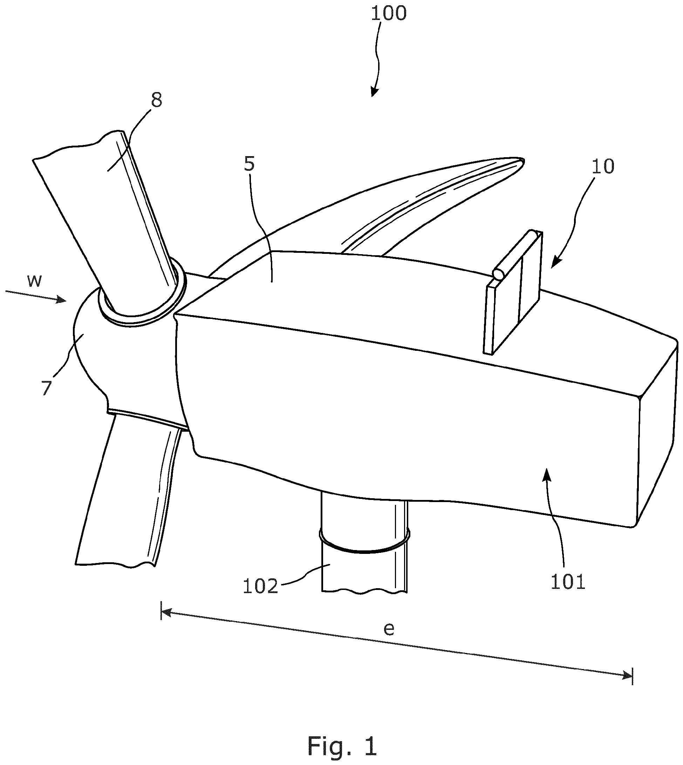

Fig. 1 shows a perspective view of a wind turbine 100 comprising a nacelle 101 and a cooling device 10. The nacelle 101 is situated on top of a tower 102 and has a front facing a hub 7 in which a plurality of rotor blades 8, normally three blades, is fastened. The nacelle 101 may house a generator and other components used for driving the conversion process of wind energy to electricity - also known as the drive train. When producing electricity, the drive train produces a lot of heat, resulting in a less effective conversion process as described above.

In order to cool the components and other parts of the nacelle, a cooling device 10 is arranged outside the nacelle 101. Wind flowing along a longitudinal extension e of the nacelle 101 flows through at least one cooling area of the cooling device 10 and thereby cools a cooling medium circulated within the cooling device. The cooled cooling medium exchanges heat primarily with components or equipment to be cooled. The nacelle 101 has a first face 5 with a longitudinal extension e in the wind direction w. The cooling device 10 may be placed in front of, in the middle of, or in the back of the nacelle.

The present invention will mainly be described in connection with an upwind wind turbine, i.e. a wind turbine where the nacelle 101 is placed downwind from the wind turbine blades 8. However, the invention may also advantageously be implemented in a downwind wind turbine, i.e. a wind turbine where the nacelle is placed upwind from the wind turbine blades.

The cooling device 10 may be an active cooling device or a passive cooling device. The cooling device 10 utilises the wind, where the wind flowing around the nacelle of the wind turbine to cool a number of fluid tubes through which the cooling medium is circulated, thereby decreasing the temperature of the cooling medium. In addition, a fan or similar means may be arranged in connection with the cooling device 10 for ensuring proper wind flow to the cooling device in all conditions, i.e. an active cooling device.

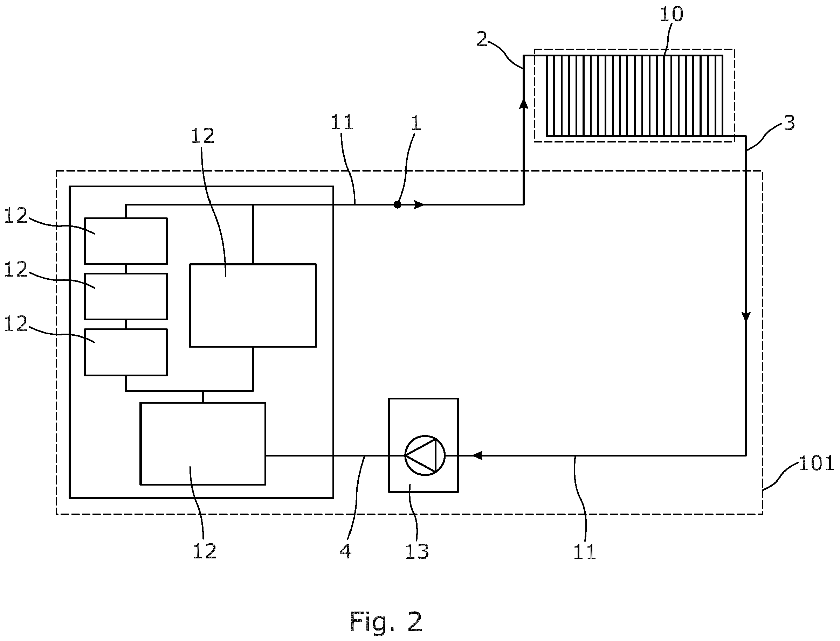

In Fig. 2, a known cooling system is shown. A cooling medium is configured to be circulated in a cooling circuit 11, the cooling circuit 11 is fluidly connecting with the components 12 and the cooling device 10. The cooling device 10 is arranged on an exterior face of the nacelle 101 and is exposed to ambient conditions, such as wind flow and ambient air temperature outside the nacelle 101. As described above, the cooling medium is cooled in the cooling device 10 by wind flow passing through the cooling device 10, and the cooling medium is circulated from the cooling device 10 to the components 12. The cooling medium is circulated in the cooling circuit 11 by means of a pump unit 13.

When the cooling medium reaches the components 12. i.e. the heat generating components, the components will dissipate thermal energy causing a rise in temperature in the cooling medium. The components 12 vary in size and rate of waste heat generation and can be connected in parallel or in series with one another, as shown in Fig. 2. Here, a total of five components 12 have been shown, although the number could be significantly larger or smaller depending on the wind turbine. These components 12 do often but not exclusively cover machinery and electronics such as bearings, brakes, gearbox, generator, pumps, hydraulics, fans, transformers and converters.

The pump unit 13 ensures a continuous flow of the cooling medium in the cooling system and transports the heated cooling medium from the components 12 to the externally mounted cooling device 10 exposed to ambient conditions. Wind on the external side cools the cooling medium which is then returned to the nacelle 101.

Hereinafter, the cooling medium is lead back to the components 12 and the cycle repeats itself.

Going through the cooling cycle in terms of the temperature distribution of the cooling medium, please consider the points 1 to 4 in the cooling system in Fig. 2. A cooling system running according to present day design could have a cooling medium temperature at point 1 (outlet of the last component) of 55°C. Assuming that well insulated pipes transport the cooling medium in the cooling circuit 11 to the cooling device 10, the temperature of the cooling medium will remain the same at the entrance of the cooling device 10 at point 2. Wind at an ambient air temperature, e.g. 20°C, passes through the cooling device 10 on the external side and cools the cooling medium to e.g. 40°C at point 3. From here, the cooling medium is pumped to the components 12 at this temperature since it does not pass other devices or components in its way, hence the temperature at point 4 will substantially be the same as at point 3 in the design shown in Fig. 2.

In the above example, there is a temperature difference from the cooling medium at the inlet of the cooling device 10 to the ambient air of 55°C - 20°C = 35°C, which enables a given amount of energy to be dissipated from the cooling device to the surrounding air. In the example, this amount of energy results in a temperature drop to 40°C of the cooling medium.

However, if the wind turbine is placed in a hot climate with an ambient air temperature of 30°C instead of 20°C, the temperature difference becomes 25°C which will result in a reduced heat transport away from the cooling device and hence the cooling medium. In this situation, the outlet temperature from the cooling device 10 might be 45°C instead of 40°C where the latter is the desired entry temperature for the components. If the ambient air temperature is further increased, the energy transport will further decrease and the outlet temperature from the cooling device will increase accordingly. This tendency continues all the way to the point where the ambient air temperature is equal to the inlet temperature at the cooling device and where the energy transport becomes zero resulting in equal inlet and outlet temperatures to/from the cooling device.

The problem of elevated ambient air temperature is the main motivation for the present invention.

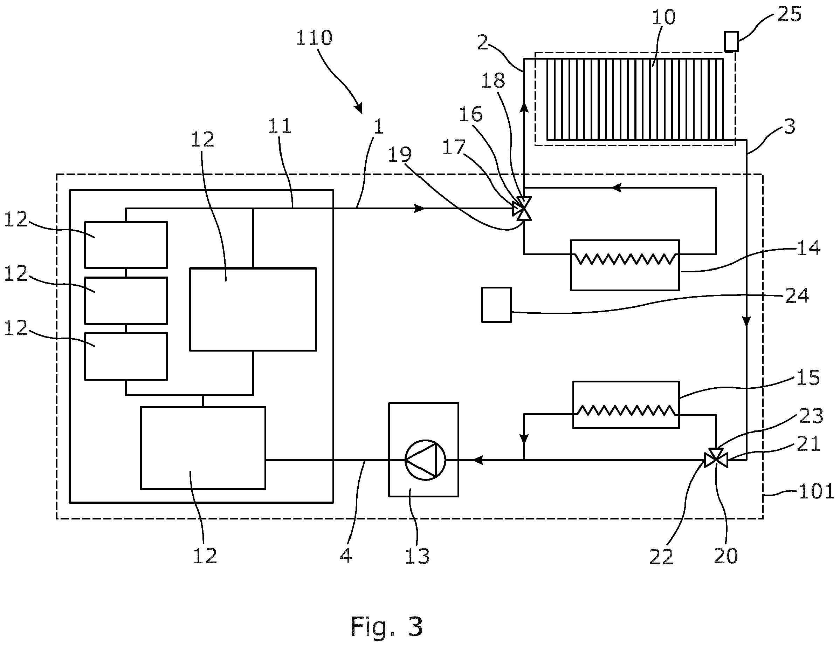

In Fig. 3, an embodiment of the wind turbine cooling system 110 of the present invention is shown. The design of the cooling circuit 11 is similar to the one shown in Fig. 2 and described above. Hence, the different components and elements are also present in the embodiment shown in Fig. 3.

According to the inventive concept, a first temperature altering section 14 is fluidly connected with the cooling circuit 11 upstream of the cooling device 10, the first temperature altering section 14 being configured to heat the cooling medium before entering into the cooling device 10. Furthermore, a second temperature altering section 15 is fluidly connected with the cooling circuit 11 downstream of the cooling device 10, the second temperature altering section 15 being configured to cool the cooling medium after it has left the cooling device 10.

The wind turbine cooling system comprises a first valve unit 16 configured to fluidly connect the components 12 with the cooling device 10 and/or the first temperature altering section 14. Also, the wind turbine cooling system comprises a second valve unit 20 configured to fluidly connect the cooling device 10 with the components 12 and/or the second temperature altering section 15.

In the present embodiment, the cooling medium is fluidly connected with the first temperature altering section 14 via the first valve unit 16 having an inlet 17, a first outlet 18 and a second outlet 19, the first valve unit 16 is configured to have a first position wherein the inlet 17 is fluidly connected with the first outlet 18, and a second position wherein the inlet 17 is fluidly connected with the second outlet 19, and wherein the inlet 17 is fluidly connected with the components 12, the first outlet 18 is fluidly connected with the cooling device 10 and the second outlet 19 is fluidly connected with the first temperature altering section 14.

In addition, the cooling medium is fluidly connected with the second temperature altering device 15 via the second valve unit 20 having an inlet 21, a first outlet 22 and a second outlet 23, the second valve unit 20 is configured to have a first position wherein the inlet 21 is fluidly connected with the first outlet 22, and a second position wherein the inlet 21 is fluidly connected with the second outlet 23, and wherein the inlet 21 is fluidly connected with the cooling device 10, the first outlet 22 is fluidly connected with the components 12 and the second outlet 23 is fluidly connected with the second temperature altering section 15.

The first valve unit 16 and the second valve unit 20 may for instance be modulated solenoid valves, three-way valves or similar.

The first temperature altering section 14 and the second temperature altering section 15 are in present embodiment shown as individual sections. However, they may be operatively connected, for instance via a control unit 24.

Both temperature altering sections 14, 15 may each comprise a heat exchanger configured to heat the cooling medium in the first temperature altering section 14 and cool the cooling medium in the second temperature altering section 15.

An ambient air temperature may be measured by an ambient air temperature sensor 25.

Additional temperature sensors may be arranged in connection with the cooling circuit 11 for measuring the temperature of the cooling medium at different locations, for instance at points 1-4. Some of the measuring points are shown outside the nacelle, however, the measuring points may all be arranged inside the nacelle or some inside and others outside. Advantageously, at least a first temperature sensor is arranged for measuring the temperature of the cooling medium downstream of the components, and at least a second temperature sensor may be arranged for measuring the temperature of the cooling medium downstream of the cooling device.

The temperature sensors, the ambient air temperature sensor 25, the first valve unit 16, the second valve unit 20, the first temperature altering section 14, and the second temperature altering section 15 may all be operatively connected with the control unit 24.

For instance, the second temperature sensor may measure the temperature of the cooling medium downstream of the cooling device 10. The measured temperature may be transmitted to the control unit 24 which on basis of the measured temperature controls the first temperature altering section so that the cooling medium may be heated or cooled before entering into the cooling device, thereby providing an optimum cooling system under varying ambient temperatures, especially in a warm climate.

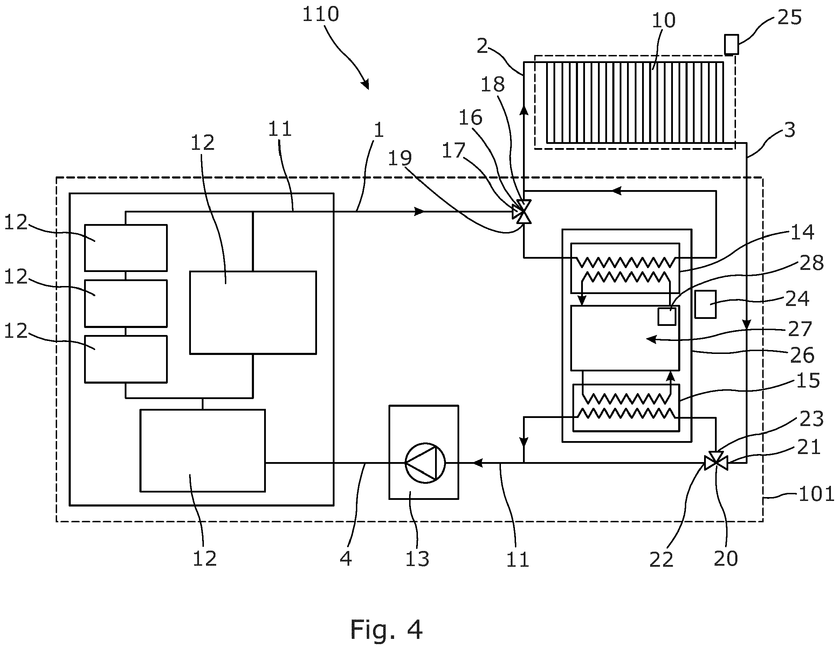

In Fig. 4, another embodiment of the wind turbine cooling system 110 of the present invention is shown. The design of the cooling circuit 11 is similar to the one shown in Fig. 2 and described above. Hence, the different components and elements are also present in the embodiment shown in Fig. 4.

In the present embodiment, the first temperature altering section 14 is fluidly connected with the cooling circuit 11 upstream of the cooling device 10, the first temperature altering section 14 being configured to heat the cooling medium before entering into the cooling device 10. Furthermore, the second temperature altering section 15 is fluidly connected with the cooling circuit 11 downstream of the cooling device 10, the second temperature altering section 15 being configured to cool the cooling medium after it has left the cooling device 10.

Furthermore, the first temperature altering section 14 and the second temperature altering section 15 are integrated into a temperature altering device 26.

In the same manner as described above, the cooling medium is fluidly connected with the first temperature altering section 14 via a first valve unit 16 having an inlet 17, a first outlet 18 and a second outlet 19, the first valve unit 16 is configured to have a first position wherein the inlet 17 is fluidly connected with the first outlet 18, and a second position wherein the inlet 17 is fluidly connected with the second outlet 19, and wherein the inlet 17 is fluidly connected with the components 12, the first outlet 18 is fluidly connected with the cooling device 10, and the second outlet 19 is fluidly connected with the first temperature altering section 14.

Also, the cooling medium is fluidly connected with the second temperature altering device 15 via a second valve unit 20 having an inlet 21, a first outlet 22 and a second outlet 23, the second valve unit 20 is configured to have a first position wherein the inlet 21 is fluidly connected with the first outlet 22, and a second position wherein the inlet 21 is fluidly connected with the second outlet 23, and wherein the inlet 21 is fluidly connected with the cooling device 10, the first outlet 22 is fluidly connected with the components 12, and the second outlet 23 is fluidly connected with the second temperature altering section 15.

The first valve unit 16 and the second valve unit 20 may in the present embodiment also be modulated solenoid valves, three-way valves or similar.

In the present embodiment the first temperature altering section 14 and the second temperature altering section 15 are operatively connected, for instance via a control unit 24. However, each section may be controlled independently of the other.

In another embodiment, the first temperature altering section 14 and the second temperature altering section 15 may be fluidly connected with the cooling circuit so that the cooling medium downstream of the components may be circulated directly into the first temperature altering section before the cooling medium is circulated to the cooling device, and the cooling medium will in the same manner downstream of the cooling device be circulated directly into the second temperature altering section before the cooling medium is circulated to the components. In this embodiment, the first valve unit and the second valve unit may be excluded from the wind turbine cooling system.

The control unit 24 is configured to alter the temperature of the cooling medium upstream of the cooling device 10 in relation to a measured ambient air temperature and/or a measured cooling medium temperature downstream of the cooling device so that the temperature of the cooling medium upstream of the cooling device 10 is larger than the ambient air temperature and/or a measured cooling medium temperature downstream of the cooling device. This will be described further below.

In the present embodiment, the temperature altering device 26 is a refrigerant system such as a chiller device 27. The chiller device 27 is configured to remove heat from the cooling medium via a vapor-compression or absorption refrigeration cycle.

In the present embodiment, the temperature levels correspond to pressure levels at which a phase change processes a working medium, which is provided in the temperature altering device 26, i.e. the chiller device 27, by means of a compressor 28. The cooling medium from the cooling device 10 is fluidly connected with the second altering section 15 via a heat exchanger so that the cooling medium can be cooled further to a lower temperature before it reaches the components 12.

The second altering section 15 is configured to decrease the temperature of the cooling medium by heat being absorbed in the working medium and the temperature altering device 26, i.e. the chiller device 27, is configured to transport and dissipate this heat to the first temperature altering section 14 of the temperature altering device 26.

The cooling medium from the components 12 is fluidly connected to the first temperature altering section 14 where the cooling medium receives the dissipated energy via a heat exchanger at a higher temperature and causing the temperature of the cooling medium to increase before it reaches the cooling device 10.

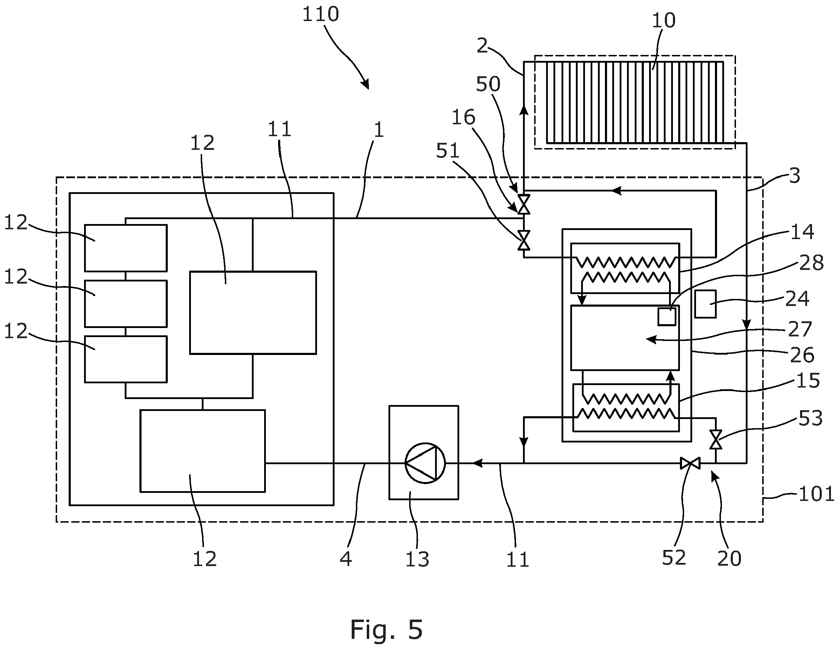

In Fig. 5, yet another embodiment of the wind turbine cooling system 110 of the present invention is shown. The design of the cooling circuit 11 is similar to the one shown in Fig. 4 and described above. Hence, the different components and elements are also present in the embodiment shown in Fig. 5.

In the present embodiment, the first temperature altering section 14 is fluidly connected with the cooling circuit 11 upstream of the cooling device 10, the first temperature altering section 14 being configured to heat the cooling medium before entering into the cooling device 10. Furthermore, the second temperature altering section 15 is fluidly connected with the cooling circuit 11 downstream of the cooling device 10, the second temperature altering section 15 being configured to cool the cooling medium after it has left the cooling device 10.

Furthermore, the first temperature altering section 14 and the second temperature altering section 15 are integrated into a temperature altering device 26. In the present embodiment, the temperature altering device 26 may also be a refrigerant system such as a chiller device 27 as described above in connection with Fig. 4. The chiller device 27 is configured to remove heat from the cooling medium via a vapour-compression or absorption refrigeration cycle.

In this embodiment, the first valve unit 16 comprises a first valve 50 having a first valve position wherein the components 12 are fluidly connected with the cooling device 10 and a second valve position wherein a fluid communication through the first valve 50 is closed, and a second valve 51 having a first valve position wherein the components 12 are fluidly connected with the first temperature altering section 14 and a second valve position wherein a fluid communication through the second valve 51 is closed. Both the first valve 50 and the second valve 51 may have intermediate positions between the first valve position and the second valve position so that varying flow through either the first valve 50 or the second valve 51 may be provided depending on the circumstances.

In addition, the second valve unit 20 comprises in this embodiment a first valve 52 having a first valve position wherein the cooling device 10 is fluidly connected with the components 12 and a second valve position wherein a fluid communication through the first valve 52 is closed, and a second valve 53 having a first valve position wherein the cooling device 10 is fluidly connected with the second temperature altering section 15 and a second valve position wherein a fluid communication through the second valve 53 is closed. As mentioned above, both the first valve 52 and the second valve 53 may have intermediate positions between the first valve position and the second valve position so that varying flow through either the first valve 52 or the second valve 53 may be provided depending on the circumstances.

In an embodiment, the first valve and the second valve are operatively connected, hence, for instance when the first valve is in the first valve position, the second valve may be in the second valve position, or vice versa.

The first valve and the second valve may be shut-off valves, two-way valves or throttle valves, or similar valves.

In Figs. 3-5, the cooling system layout is presented as having a single circuit of cooling medium only. However, there can be multiple variations of this cooling system design with some of the most common being two completely separated cooling circuits or two coupled cooling circuits. In the first mentioned cooling system configuration, the cooling medium will run through a specified part of the cooling device, e.g. half of the total cooling area, before being pumped to a number of components. Likewise, the other cooling circuit will pass through the remaining part of the cooling device and the remaining number of components. The case of two or more coupled cooling circuits is similar to the separated case, but here the cooling circuits share the same cooling medium and pumping unit. The transport of cooling medium in the cooling system would then be reduced to e.g. half of the cooling device and next to a number of components before returned to the remaining part of the cooling device and finally the remaining number of components. In these mentioned cases, the temperature altering device could be integrated as shown in figure 4, but with either two first temperature altering sections upstream of the cooling device and two temperature altering sections downstream of the cooling device to cover both cooling circuits or alternatively installing two cooling devices instead of one.

According to the inventive concept, the temperature altering sections 14, 15, compared to the example described in connection with Fig. 2, i.e. prior art solution, are to alter the temperatures in the cooling system.

For instance, the cooling medium temperature at point 1 is 55°C in Figs. 3-5. In circumstances where the first temperature altering section 14 is enabled and the flow of cooling medium is directed through the first temperature altering section 14, the cooling medium absorbs thermal energy which results in a temperature rise to e.g. 65°C in point 2. After the cooling medium is reduced in temperature to e.g. 50°C in point 3 by exchanging heat with wind passing through the cooling device 10, the second valve 20 may direct the flow of cooling medium through the second temperature altering section 15 where the temperature of the cooling medium is reduced even further to e.g. 40°C at point 4. From here, the cooling medium has reached the desired design temperature before entering the heat generating components.

Hence, the temperatures of the cooling medium in points 1 and 4 (outlet and inlet of the components 12) remain the same as mentioned above with the first and second temperature altering sections 14, 15 enabled. This means that the components 12 do not see any change in conditions by adding the first and second temperature altering sections 14, 15 to the cooling circuit 11.

Furthermore, by adding the first and second temperature altering sections 14, 15, temperatures of the cooling medium are altered in the cooling system 110 and the cooling device 10 is able to uphold the required dissipation of heat to the surroundings due to an increased temperature of the cooling medium in the inlet of the cooling device 10. This restores the needed temperature difference between the cooling medium and the ambient conditions when the wind turbine is located in a hot climate.

In addition, the general temperature intervals when enabling the first and second temperature altering sections 14, 15 in the cooling system 110 are preferably expected to be:
Point 1: 40-65°C
Point 2: 45-80°C
Point 3: 35-55°C
Point 4: 30-50°C

The temperature at point 1 may be a first temperature, the temperature at point 2 may be a second temperature, the temperature at point 3 may be a third temperature and the temperature at point 4 may be a fourth temperature.

Hence, the first temperature may be between 40-65°C, the second temperature may be between 45-80°C, the third temperature may be between 35-55°C, and the fourth temperature may be between 30-50°C.

The present invention has multiple benefits and can solve different problems within the field of wind turbine design due to the present invention having different configurations or modes.

Hence, by implementing the present invention, the cooling of components of the wind turbine may be boosted at elevated ambient air temperatures. In addition, due to the additional cooling capabilities of the cooling system according to the present invention it may be possible to increase a megawatt rating of a wind turbine, and/or increase the power density, i.e. shrink components, of a wind turbine.

The present invention originates from the fact that the first temperature altering section and the second temperature altering section provide access to extra cooling of the cooling system at a relatively low cost of energy.

As mentioned above, extra cooling may solve the problem of cooling at high ambient air temperatures, but it may also have additional advantages even in circumstances when the ambient air temperature is not critically high.

The present invention ensures sufficient cooling even in adverse temperature conditions with high ambient air temperature by enhancing or boosting the ability to cool the wind turbine under these circumstances.

The present invention boosts the performance of the existing cooling system of a wind turbine without the components to be cooled, receiving anything but the cooling medium within the normal acceptable range of temperatures, and without doing any alterations or adding features or equipment to the cooling device itself.

The present invention utilizes a change in the before mentioned temperature difference between the cooling medium and the ambient air temperature by means of integrating the first temperature altering section 14 and the second temperature altering section 15 into the cooling circuit 11.

Furthermore, the present invention makes it is possible to utilize the cooling system 110 in a different way in the case when the ambient air temperature is not critically high. The existing cooling systems can deliver the required amount of cooling for normal system operation. If the cooling performance of the first temperature altering section 14 and the second temperature altering section 15 is added in this event, it would still lower the cooling medium temperature to the components, meaning that more heat is allowed to be dissipated in the components before their operating temperature is back to the level of normal turbine operation without the first temperature altering section 14 and the second temperature altering section 15. As a consequence, for instance, the drive train of the wind turbine can be subjected to a larger load, and thereby corresponding thermal load, than usual which corresponds to increasing the megawatt rating of the wind turbine.

An additional advantage of the present invention is related to the so-called power density which is a measure of the power output of components related to their size and would be evaluated in the unit MW/m3. In the prior design of wind turbines, a tendency of producing larger and larger wind turbines is clear and have been so for many years. However, in order to keep the nacelle and components in the nacelle at a manageable size and weight, it is desired by the wind industry to increase the power density of components as the wind turbines increase in size. As mentioned above, if the first temperature altering section 14 and the second temperature altering section 15 are enabled during conditions of non-critical ambient air temperature it could still produce a further chilled cooling medium to the components generating heat. However, if the load of the wind turbine remains unchanged, the key components could be reduced in size and thereby reducing the cost of the wind turbine in general as well. For instance, if the number of copper windings of the generator are reduced but the electrical current through them remain unchanged, the electrical resistance of the copper windings is increased. This will result in more waste heat from the component, i.e. generator, which the cooling system must remove. Again, an increase in thermal load is not a problem due to the introduction of enhanced cooling by the present invention. Furthermore, a much sought-after parameter in wind turbine system design is redundancy. This ensures the wind turbine to continue full or part load operation during the event of a breakdown of key components. In this situation an identical or backup component will be activated and the non-functioning component omitted.

Redundancy is also introduced with integrating the present invention in the existing cooling system. In the unlikely event of a breakdown of the first temperature altering section 14 and the second temperature altering section 15 or during maintenance, the consequence for the turbine would be normal operation according to present design of the wind turbine. If the ambient air temperature becomes critically high, the turbine will reduce its power output and de-rate to avoid overheating. In other words, the wind turbine is facing a situation identical to the present-day design without the present invention.

In addition, the maximum load of the drive train, for instance, would be restored to the original level set in the present-day design and the megawatt rating is returned to the default value as well.

Common for all circumstances is that the wind turbine will continue operation in case of a breakdown of the first temperature altering section 14 and the second temperature altering section 15.

The present invention provides improved cooling performance which has a range of interesting technological aspects as well as potential market implications.

In relation to the enhanced cooling for warm climates, a significant portion of the offshore wind turbines will in the coming years be erected in warm or tropical regions around the world such as Taiwan, China, Brazil and the US.

Offshore wind turbines are generally larger in size and rated power output, but has a lower sales volume compared to onshore wind turbines which are physically smaller and have a lower MW rating.

In the onshore market, a number of both the largest current markets (e.g. the US, Brazil, India and China) and a number of the new fast-growing markets (e.g. Australia, Mexico, the Middle East and Africa) have regions with very warm climates. Therefore, a significant number of onshore turbines are expected to be erected in warm climates onshore in the future.

Because of this, the present invention is highly relevant for both the future onshore and offshore markets.

Furthermore, when integrated into the temperature altering device 26, the first temperature altering section 14 and the second temperature altering section 15 may be retro-fitted on existing wind turbines. For instance, the temperature altering device 26 may be arranged inside the nacelle as shown in Figs. 3-5, however, in another not shown embodiment the temperature altering device 26 may be arranged outside the nacelle, or for instance in the tower.

In addition, the heat-generating components are preferably arranged inside the nacelle as shown in the Figs. 3-5, however, in not shown embodiments the components may be arranged outside the nacelle, in the vicinity of the nacelle and/or wind turbine, such as the tower, or near the tower.

Although the invention has been described in the above in connection with preferred embodiments of the invention, it will be evident for a person skilled in the art that several modifications are conceivable without departing from the invention as defined by the following claims.

## Claims

1. A wind turbine cooling system (110) configured to cool components (12) of a wind turbine (100), the wind turbine having a nacelle (101), comprising
- a cooling medium configured to be circulated in a cooling circuit (11), the cooling circuit (11) is fluidly connecting the components (12) and a cooling device (10),
- the cooling device (10) is arranged on an exterior face of the nacelle (101) and is exposed to ambient conditions, such as wind flow and ambient air temperature outside the nacelle (101),
- the cooling medium is cooled in the cooling device (10) by wind flow passing through the cooling device (10),
- the cooling medium is circulated from the cooling device (10) to the components (12),
wherein a first temperature altering section (14) is fluidly connected with the cooling circuit (11) upstream of the cooling device (10), the first temperature altering section (14) being configured to heat the cooling medium before entering into the cooling device (10), and
a second temperature altering section (15) is fluidly connected with the cooling circuit (11) downstream of the cooling device (10), the second temperature altering section (15) being configured to cool the cooling medium after it has left the cooling device (10).

2. A wind turbine cooling system (110) according to claim 1, wherein the first temperature altering section (14) and the second temperature altering section (15) are integrated into a temperature altering device (26).

3. A wind turbine cooling system (110) according to claim 1 and/or 2, wherein the first temperature altering section (14) and the second temperature altering section (15) are operatively connected.

4. A wind turbine cooling system (110) according to any of the preceding claims, further comprising a first valve unit (16) configured to fluidly connect the components with the cooling device (10) and/or the first temperature altering section (14).

5. A wind turbine cooling system (110) according to any of the preceding claims, further comprising a second valve unit (20) configured to fluidly connect the cooling device (10) with the components and/or the second temperature altering section (15).

6. A wind turbine cooling system (110) according to any of the preceding claims, further comprising an ambient air temperature sensor (25) to measure an ambient air temperature and/or a second temperature sensor configured to measure a temperature of the cooling medium downstream of the cooling device.

7. A wind turbine cooling system (110) according to any of the preceding claims, further comprising a first temperature sensor configured to measure a temperature of the cooling medium downstream of the components (12).

8. A wind turbine cooling system (110) according to any of the preceding claims, further comprising a control unit (24) being operatively connected with the first temperature altering section (14), the second temperature altering section (15), the ambient air temperature sensor (25), the first temperature sensor, the second temperature sensor, the first valve unit (16) and/or the second valve unit (20).

9. A wind turbine cooling system (110) according to claim 8, wherein the control unit (24) is configured to alter the temperature of the cooling medium upstream of the cooling device (10) in relation to a measured ambient air temperature so that the temperature of the cooling medium upstream of the cooling device (10) is larger than the ambient air temperature.

10. A wind turbine cooling system (110) according to claim 2, wherein the temperature altering device (26) is a refrigeration system, such as a chiller device (27).

11. A wind turbine cooling system (110) according to claim 2 and/or 10, wherein temperature levels correspond to pressure levels at which a phase change processes a working medium, which is provided in the temperature altering device (26) by means of a compressor (28).

12. A wind turbine cooling system (110) according to claim 11, wherein the cooling medium from the cooling device (10) is fluidly connected with the second temperature altering section (15) via a heat exchanger so that the cooling medium can be cooled further to a lower temperature before it reaches the components (12).

13. A wind turbine cooling system (110) according to claims 11 and/ or 12, wherein the second temperature altering section (15) is configured to decrease the temperature of the cooling medium by heat being absorbed in the working medium and the temperature altering device (26) is configured to transport and dissipate this heat to the first temperature altering section (14) of the temperature altering device (26).

14. A wind turbine cooling system (110) according to claim 13, wherein the cooling medium from the components (12) is fluidly connected to the first temperature altering section (14) where the cooling medium receives the dissipated energy via a heat exchanger at a higher temperature causing the temperature of the cooling medium to increase before it reaches the cooling device (10).

15. A cooling method for cooling one or more components (12) of a wind turbine (100) by means of a wind turbine cooling system (110) according to any of the preceding claims, comprising:
- measuring a first temperature of the cooling medium downstream of the components (12),
- increasing the temperature of the cooling medium upstream of the cooling device (10) to a second temperature,
- decreasing the temperature of the cooling medium in the cooling device (10) to a third temperature, and
- decreasing the temperature of the cooling medium downstream of the cooling device (10) to a fourth temperature being lower than the third temperature.

16. A cooling method according to claim 15, further comprising:
- measuring an ambient air temperature and/or a cooling medium temperature downstream of the cooling device,
- altering the second temperature of the cooling medium upstream of the cooling device (10) in relation to the measured ambient air temperature and/or the cooling medium temperature downstream of the cooling device so that the second temperature of the cooling medium is larger than the ambient air temperature and/or the cooling medium temperature downstream of the cooling device.
